# EUROPEAN PATENT APPLICATION

(11) **EP 2 110 729 A1**
(43) Date of publication of application: **21.10.2009**
(21) Application number: 07730319.6
(22) Date of filing: 09.02.2007
(51) Int. Cl.: G05F 1/67, F24J 2/38

(54) **DEVICE FOR CONVERSION OF DIRECT CURRENT INTO ALTERNATING CURRENT AND FOR CONTROL OF THE MAXIMUM POWER FOR SOLAR PANELS**

(71) Applicant: Ingeteam Energy, S.A., 31621 Sarriguren, Navarra (ES)
(72) Inventor: COLOMA CALAHORRA, Javier, E-31008 Pamplona (ES); ANCIN JIMENEZ, Francisco, Javier, E-31008 Pamplona (ES); RIEZU BOJ, Jesus, Maria, E-31008 Pamplona (ES)
(74) Representative: Carpintero Lopez, Francisco
(86) International application number: PCT/ES2007/000071
(87) International publication number: WO 2008/096019

(57) **Abstract**

The invention comprises the specific elements for converting the energy of a photovoltaic inverter (2) and a controller (3) which implements a control interface (5) for a solar tracker (9), as well as MPPT method for locating the maximum power point of a photovoltaic generator (1), and also allows placing the generator (1) in optimum position with respect to the sun and obtaining at each moment the maximum possible power that said generator (1) is capable of supply. Both the specific elements for converting the energy of a photovoltaic inverter (2), and the controller (3) where it is connected can be integrated using a single communications interface (4), and forming a single device.

## Description

### OBJECT OF THE INVENTION

The present invention has its main field of application in the industry of designing electronic devices, and more specifically those conceived in the sector of photovoltaic solar power systems.

The object of the invention is to provide an integrated device constituting a photovoltaic inverter to convert direct current obtained from solar panels into alternating current, allowing at all times to obtain the maximum power that these solar panels can supply by means of a control performed in the same device, which combines an electronic monitoring and a mechanical monitoring of the maximum power point.

### BACKGROUND OF THE INVENTION

The main element in any photovoltaic installation is the photovoltaic generator, formed by a set of photovoltaic modules or panels connected in series-parallel that allow transforming sunlight into electric power.

When sunlight reaches one of these photovoltaic panels, a direct electric current is generated.

The set of solar panels is connected to an electronic converter known as an inverter, which conditions the power generated by the panels, changing direct current into alternating current and injecting it into the electric grid or other load types, depending on the application of the photovoltaic installation.

The value of the current obtained in the solar panel depends on the voltage at the ends of the panel. The relationship between the current and voltage determines the I-V characteristic curve for the panel, which is simply a representation on two axes (current in the vertical axis and voltage on the horizontal axis) of the different working points of the panel. Thus, the photovoltaic generator presents a I-V characteristic curve resulting from the union of the various curves of the modules. This curve shows the differences between the panels due to parameter dispersion, variation of working conditions (partial shading) etc. Associated to the panel I-V curve is a P-V curve for the photovoltaic generator, which represents power on the vertical axis and voltage on the horizontal axis.

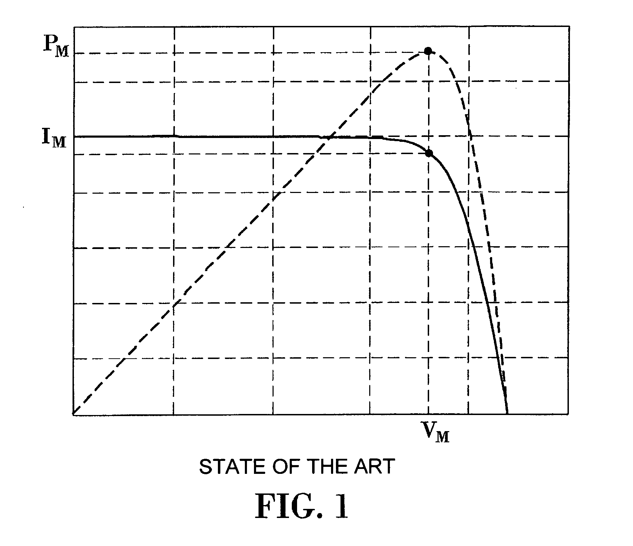

Figure 1 shows a typical I-V characteristic curve (continuous graph) and the corresponding P-V curve (dotted graph). Each point on these curves represents a working point of the panel, which is determined by the external load and by various environmental factors such as irradiance and temperature conditions of the panel. For given environmental and load conditions in which the photovoltaic panel is working, there is a single working point at which the power obtained from the panel is maximum. This point is known as the maximum power point or MPP (P_{M}), the current and voltage parameters of which correspond to the values I_{M} and V_{M}.

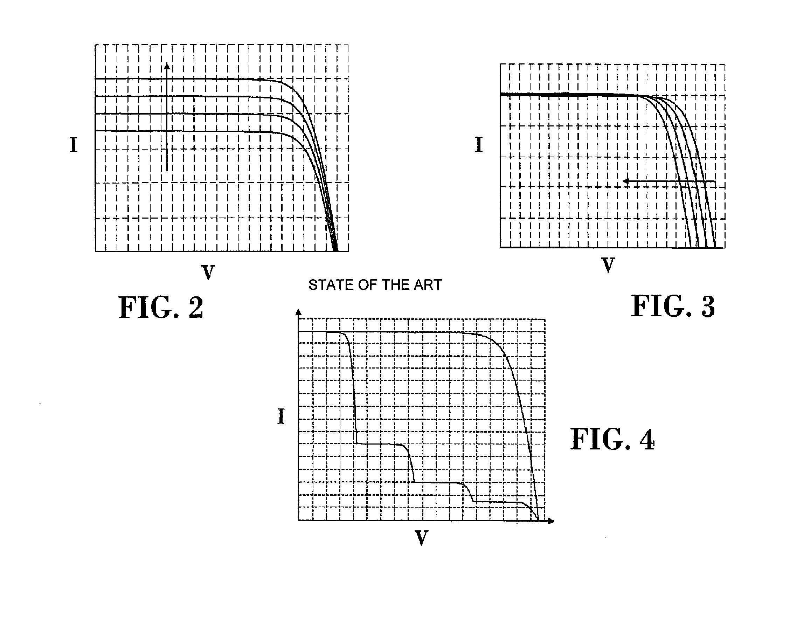

The irradiance or illumination intensity mainly affects the current (approximately proportional to the panel short-circuit current), while the temperature affects the voltage, although to a lesser degree than the irradiance affects the current. The influence of these factors (irradiance and temperature) on the panel's I-V characteristic curve is shown in figures 2 and 3, where the arrow on the graphs indicates an increase in irradiance/temperature.

Each panel consists of several photovoltaic cells. Solar power installations can also use thermoelectric cells, photoelectromechanical cells or a combination of these. To obtain a greater output voltage, these cells are placed in series, with the same current flowing through them. In case of irradiance differences in a panel due to partial shading, some cells will consume power so that hot spots will appear. To prevent this, a series of bypass diodes are generally placed in parallel with groups of cells in series. In case of partial shading of a cell, the diode placed in parallel to it will conduct. This results in elbows on the I-V curve, defining several relative maxima on the P-V curve. Figure 4 shows the I-V curve of a panel with partial shading.

The power delivered by the photovoltaic generator depends on the voltage at which the inverter connected at its output is made to work. As the P-V curve of the panel changes over time (depending on the atmospheric conditions at each time: irradiance, temperature, partial shading, etc.), to obtain the maximum power from the panel one must use in the inverter a technique for searching and tracking the voltage of the maximum power point so that it is made to work in this point. The maximum power point search and tracking techniques are commonly referred to as MPPT algorithms (Maximum Power Point Tracking).

In this sense one can cite as examples international patent applications W02004/008619 and W02004/100344, which describe various photovoltaic inverters and the MPPT methods they use. The most common MPPT methods measure instantaneous electrical magnitudes of the system (panel current and/or voltage, AC output power, etc.) and use these values to determine voltage and/or current parameters that define the generator working point, varying it until the maximum power point is found.

The inverters used to date can apply several MPPT algorithms that act on a single variable to obtain the maximum power of the photovoltaic generator, namely the generator working voltage, determined by the inverter, in specific solar irradiance conditions. However, one of the factors that most affect the I-V curve and therefore the power that can be extracted from the generator is the solar irradiance on its panels, which depends greatly on their position with respect to the sun.

On another hand, the maximum energy reaching the panels and therefore the maximum power that can be obtained takes place when these are perpendicular to the sun. To increase the resulting power, in many cases the panels are placed on moving structures known as solar trackers with one or two degrees of freedom, depending on whether they move the panel about one or two axes to place them as perpendicular as possible to the sun at each time. The power increase provided by these techniques can reach 35% with one-axis tracking and exceed 40% with two-axis tracking. Controlling various sensors and actuators allows tracking the sun's ecliptic, so that the angle of the panels is always optimal with respect to the sun. This control is generally performed by an automaton or electronic cards which, together with the electrical connections of the actuators, detectors, protections etc. is encapsulated in a box adjacent to the inverter.

In this sense, European patent applications EP0944843 and EP0050189 can be cited as examples of specifications on different solar trackers, basically consisting of a mechanical structure separate from the photovoltaic inverter on which the photovoltaic panels are installed.

### DESCRIPTION OF THE INVENTION

The present invention proposes integrating the control of a solar tracker in an inverter, so that the inverter connected to a photovoltaic generator, in addition to implementing for example by any MPPT method that sets the optimum working voltage of the generator, by an electronic tracking of the maximum power, a mechanical tracking of the sun is also performed to establish an optimum orientation of the solar panels comprising said generator.

Specifically, the device of the invention includes in a single mechanical enclosure an inverter that converts the DC current generated by the panels into AC current and also allows obtaining at all times the maximum power that the panel can supply, incorporating in said mechanical enclosure means for calculating parameters that determine the Maximum Power Point and means for establishing the optimum optic position of each solar panel.

More specifically this invention, which is applicable to solar panels and particularly to photovoltaic panels, for converting direct current into alternating current and controlling the maximum power as described herein, comprises the following elements integrated in the same device:
- an inverter connected to a photovoltaic generator composed of at least one panel with a single Maximum Power Point (P_{M});
- a programmable electronic controller programmed to control all the elements of the inverter, including the calculations for determining the parameters (voltage and/or current) that determine the maximum power point of the photovoltaic generator, as well as to control a tracker with one or two axes using the signals generated by sensors of the sun's position or the photovoltaic generator's position, by acting on electric, mechanical, hydraulic or other devices allowing the photovoltaic generator to move. In addition, the configuration of the controller can incorporate strategies for moving the panels that prevent partial shading of the photovoltaic generator, as well as optional security and solar tracker maintenance functions;
- an input and output block, in which the inputs can be analogue, digital or a mixture thereof, allowing to detect the position of the photovoltaic generator, of the sun or both, while the outputs, which can be analogue or digital, allow sending movement instructions to the devices used to move the photovoltaic generator;
- optionally, it can include a communications block to monitor and configure both the functions of the photovoltaic inverter and the functions of the solar tracker.

By including in the same device, constituted by an inverter, the control of a solar tracker and the search for the maximum power point, the inverter obtains the maximum power that the generator connected to it can supply at each instant, making the generator work in its maximum power voltage and placing its solar panels in a position such that the solar irradiance is optimum. In this way, a series of sensors and actuators allow changing the position of the photovoltaic panels according to the sun's ecliptic.

In this way, the device of the invention allows obtaining the maximum power that the photovoltaic generator is able to supply at each time, as the control of the solar tracker ensures that the solar irradiance is maximum at all times and the inverter makes the photovoltaic generator operate in the maximum power point for this irradiance.

In addition, the inverter with the solar tracker control allows optimising the components used, as the same programmable control unit and all its peripherals, the same user interface system and the same power supply for all the electronics, among other components, can be used for both functions of the inverter with monitoring of the maximum power point and solar tracker control, all integrated in a single mechanical enclosure. Therefore, the device provides an improvement over existing inverters, as it simplifies and therefore reduces the cost of the resulting photovoltaic installation.

Another advantage of this integrated solution is that the communications with the photovoltaic installation are also simplified. It is possible to configure and monitor the state of the inverter and the solar tracker at the same time with a single communications system.

### DESCRIPTION OF THE DRAWINGS

To complete the description being made and to aid a better understanding of the characteristics of the invention, in accordance with a preferred example of its embodiment, a set of drawings is accompanied forming an integral part of the description where for purposes of illustration and in a non-limiting sense the following is shown:
Figure 1 shows a graphical representation of the I-V and V-P characteristic curves typical of a photovoltaic panel, according to the state of the art.
Figure 2 shows a graphical representation of several I-V characteristic curves of a same photovoltaic panel as a function of the panel irradiance, according to the state of the art.
Figure 3 shows a graphical representation of several I-V characteristic curves of a same photovoltaic panel as a function of the panel temperature, according to the state of the art.
Figure 4 shows a graphical representation of a I-V characteristic curve of a photovoltaic panel in the absence of shading conditions and the I-V characteristic curve (with elbows) of the same panel in conditions of partial shading, according to the state of the art.
Figure 5 shows a block diagram of the device object of the invention connected to a photovoltaic generator, according to a preferred embodiment of the invention.
Figure 6 shows a schematic representation of the installation of the device object of the invention in a set of photovoltaic panels.

### PREFERRED EMBODIMENT OF THE INVENTION

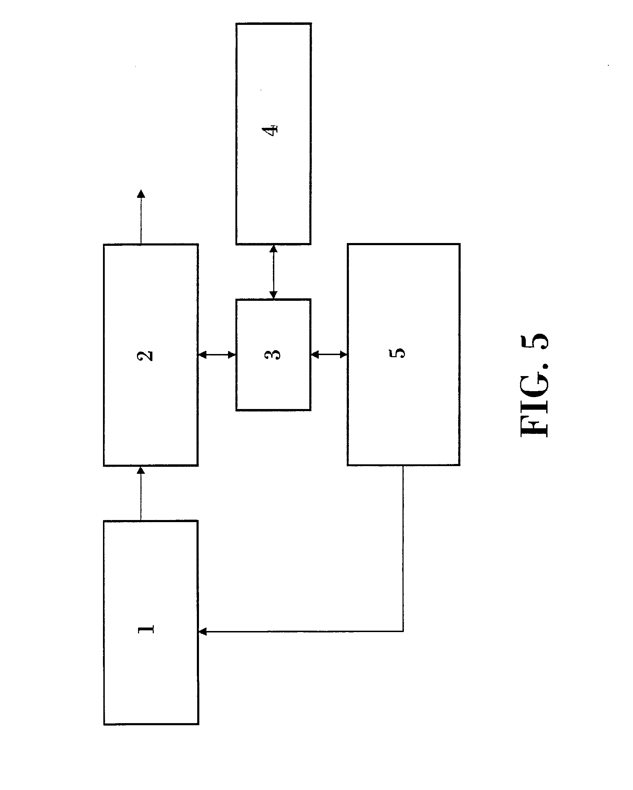

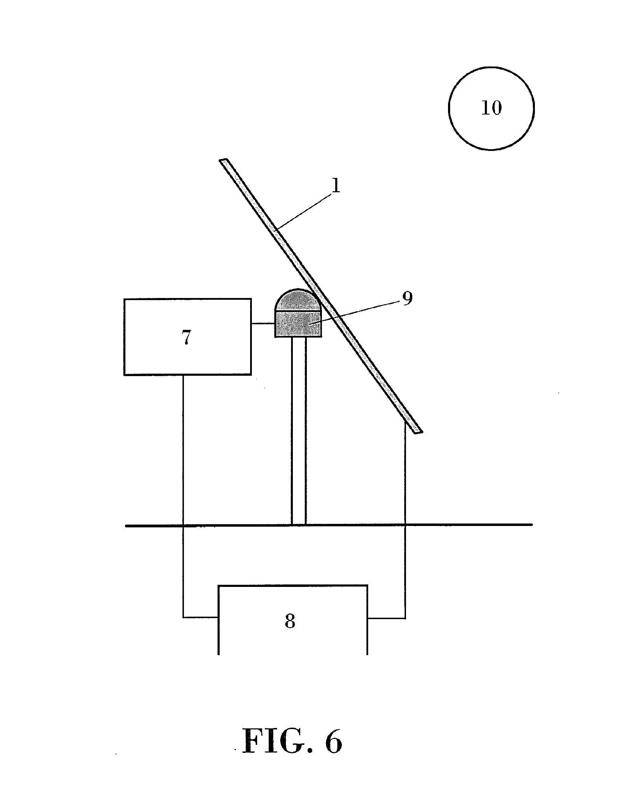

In view of figures 5 and 6, a preferred embodiment of the invention can be described as a device for converting direct current into alternating current and controlling the maximum power of solar panels, constituted by a plurality of photovoltaic cells that make up a photovoltaic generator (1) with a single Maximum Power Point, this device comprising:
- specific elements for converting the power of a photovoltaic inverter (2) connected to the photovoltaic generator (1);
- a programmable electronic controller (3), optionally provided with a communications bus or communications interface (4), this controller (3) being connected to the specific elements for converting the energy of an inverter (2). The controller (3) can be based on a general purpose microprocessor (CPU), a digital signal processor (DSP), an application specific integrated circuit (ASCI), a programmable card (FPGA) or any combination of these.

The device is configured for performing at least two functions:
a) Converting continuous current energy into alternating current energy in the specific form of a photovoltaic inverter, which includes calculation and control of parameters that determine the working point -voltage and current- of the photovoltaic generator corresponding to its Maximum Power Point;
b) Calculating the position of the sun based on astronomical calculations of the sun's position according to the time, date and geographical location, or on detectors of the position of the sun or a mixture of both, and activation of a solar tracker (9) using a control interface (5) and at least one actuator (7); this activation of the solar tracker (9) can be performed using any known control method for a tracker, configuring the control interface (5) to control the azimuth axis, the polar axis, the north-south axis, a double axis, open loop control, closed loop control or mixed control of the tracker.

Optionally, this device can include a real time clock or a global positioning system (GPS) to obtain the time, date and geographical location of the photovoltaic generator (1).

The device uses the computerised processing means of a single controller (3) to control the block containing the components of the inverter (2) as well as the data input and output block with their corresponding analogue-digital and digital-analogue converters, which define the control interface (5) for the solar tracker (9). In this way, the tracking control, whether mechanical or electromechanical, performed by the solar tracker (9) and the electronic control performed by a MPPT method are implemented in a single controller (3) connected to the inverter (2) using a single communications interface (4).

Optionally, the controller (3) can also be configured to prevent partial shading, when considered appropriate for the photovoltaic installation, using any known positioning method for preventing shading.

In other embodiments of the invention the device can comprise one or more programmable electronic controllers for performing the functions of photovoltaic inverter and solar tracker controller.

According to figures 5 and 6, the inverter (2), controller (3) and communications interface (4) of the device are integrated in a mechanical enclosure (8) with its corresponding protections, through which it is connected on one side to the photovoltaic generator (1), to the position sensors of the photovoltaic generator as incremental or absolute sensors and, optionally, to the photosensors that detect the position of the sun (10) at each time, and on the other side to the mechanical actuators (7), for example relays linked to one or more electric motors that move the panels of the photovoltaic generator (1).

The device thus described constitutes a photovoltaic converter that obtains at all times the maximum power that the photovoltaic panels can supply, not only by making them work at their optimum voltage by the MPPT method applied, but also by positioning them with respect to the sun to obtain the greatest incident irradiance by controlling the solar tracker.

The terms used in this description must be understood in a wide and non-limiting sense.

## Claims

1. A device for converting direct current into alternating current and controlling the maximum power in solar panels, **characterised in that** it comprises at least one programmable electronic controller (3) connected to specific elements for converting the energy of a photovoltaic inverter (2) configured to:
- converting the direct current energy into alternating current energy in the specific form of a photovoltaic inverter, including the calculation and control of parameters to determine the Maximum Power Point (P_{M}) of the photovoltaic generator (1) and
- activating a solar tracker (9) with a control interface (5) and at least one actuator (7) based on the calculation of the sun's position; and **in that** these specific elements for converting the energy of a photovoltaic inverter (2), the controller (3) and the control interface (5) are in the same mechanical enclosure (8).

2. A device according to claim 1, **characterised in that** it additionally comprises a communications interface (4) connected to the controller (3) with which the photovoltaic inverter (2) and the solar tracker (9) are monitored and configured.

3. A device according to claim 2, **characterised in that** the communications interface (4) is inside the mechanical enclosure (8).

4. A device according to any of the previous claims, **characterised in that** the controller (3) is configured to calculate the parameters that determine the Maximum Power Point (P_{M}) of the photovoltaic generator (1) by a MPPT algorithm.

5. A device according to any of the previous claims, **characterised in that** the controller (3) is configured to actuate the solar tracker (9) by a known control method selected from among the control of the azimuth axis, the polar axis, the north-south axis, the double axis, open-loop control, closed-loop control and mixed control.

6. A device according to any of the previous claims, **characterised in that** it includes a real time clock or a GPS global positioning system to obtain the time, date and geographical location of the photovoltaic generator (1).

7. A device according to any of the previous claims, **characterised in that** the controller (3) is configured to calculate the position of the sun based on astronomical calculations of the sun's position as a function of the time, date and geographical location, or based on detectors of the sun's position, or a mixture of both.

8. A device according to any of the previous claims, **characterised in that** the controller (3) is selected among a general purpose microprocessor (CPU), a digital signal processor (DSP), an application specific integrated circuit (ASCI), a programmable card (FPGA) or any combination of these.

9. A device according to any of the previous claims, **characterised in that** the solar tracker (9) is of the type selected among a one-axis tracker and a two-axis tracker.

10. A device according to any of the previous claims, **characterised in that** it is connected to the photovoltaic generator (1), to detectors of the sun's position (10) and to the actuators (7) that move the panels of the photovoltaic generator (1).

11. A device according to claim 10, **characterised in that** the detector of the sun's position (10) comprises at least one photocell.

12. A device according to any of the previous claims, **characterised in that** it is connected to the photovoltaic generator (1), to sensors of the position of the photovoltaic generator (1) and to the actuators (7) that move the panels of this photovoltaic generator (1).

13. A device according to any claim 12, **characterised in that** the sensors of the position of the photovoltaic generator are incremental or absolute sensors.
